# EUROPÄISCHE PATENTSCHRIFT

(11) **EP 3 508 930 B1**
(45) Veröffentlichungstag und Bekanntmachung des Hinweises auf die Patenterteilung: **20.07.2022**
(21) Anmeldenummer: 19000060.4
(22) Anmeldetag: 03.06.2015
(51) Int. Cl.: G05B 19/05, G06F 9/50, H04L 12/00

(54) **SYSTEM UND VERFAHREN ZUR STEUERUNG UND/ODER ANALYTIK EINES INDUSTRIELLEN PROZESSES**
SYSTEM AND METHOD FOR CONTROL AND/OR ANALYSIS OF AN INDUSTRIAL PROCESS
SYSTÈME ET PROCÉDÉ DE COMMANDE ET/OU D'ANALYSE D'UN PROCESSUS INDUSTRIEL

(43) Veröffentlichungstag der Anmeldung: 10.07.2019
(62) Teilanmeldung aus: 15170457.4
(73) Patentinhaber: Siemens Aktiengesellschaft, 80333 München (DE)
(72) Erfinder: Verma, Amit, 82024 Taufkirchen (DE)

(56) Entgegenhaltungen:
- EP-A1- 2 605 096
- CN-A- 102 968 320
- JP-A- 2015 056 766

## Beschreibung

Die Erfindung betrifft ein System und ein Verfahren zur Steuerung und/oder Analytik eines industriellen Prozesses und damit ein System und ein Verfahren für eine vermischte Prozesssteuerung für einen industriellen Prozess.

Eine Vielzahl von Anlagen, die eine Prozesssteuerung vornehmen, erfüllt in der Regel einfache automatisierungs- und regelungstechnische Aufgaben. Diese Aufgaben werden in der Regel von Automatisierungseinheiten durchgeführt, die Vor-Ort und damit in der Nähe des zu automatisierenden Prozesses installiert sind. Oft bestehen solche Anlagen dann auch aus einer Vielzahl meist auch räumlich getrennter, kleinerer Automatisierungseinheiten, was dann zur Folge hat, dass auch die einzelnen Prozessaufgaben verteilt ablaufen. Solche kleineren Automatisierungseinheiten sind aufgrund ihrer eingeschränkten Rechenleistung eher nicht in der Lage komplexe Regelungsstrukturen oder Regelungs- und/oder Simulationsstrategien abzubilden, wie sie in Automatisierungsgeräten der höheren Klassen möglich sind. Solche komplexeren Regelungsstrategien, die eine erhebliche Rechenkapazität benötigen können, können beispielsweise sogenannte modellprädiktive Regelungen (Model Predictive Control, MPC) sein, wie sie bevorzugt in verfahrenstechnischen Prozessen eingesetzt werden. Häufig besteht auch der Wunsch komplexe Regelungen einzurichten, die auf umfangreichen historischen Daten aufbauen und diese beispielsweise in sog. Support Vector Machines (SVM) zu nutzen, um auf dieser Basis Optimierungen am Prozess vornehmen zu können. Deshalb werden solche rechenintensiven verfahrenstechnische Prozesse oder Datenanalysemodelle häufig im übergeordneten Steuerungs-, und Überwachungssystem der Anlage automatisiert.

Wir erleben aktuell einen Trend in Richtung zentraler Datenanalytik in externen Rechnereinheiten (sog. cloud based analytic). Aufgrund seiner umfangreichen Analytikmethoden und der meist selbstlernenden Techniken erlaubt die Cloud-basierte Analytik eine wesentliche Verbesserung der Prozesssteuerungen. Allerdings sind die Cloud-basierten Ansätze oft nicht echtzeitfähig, weil die Daten von Sensoren oder Aktoren des industriellen Prozesses von der Anlage in die externe Recheneinheit übertragen werden müssen, um sie dort zu analysieren. Danach ist das Analyseergebnis für weitere Aktionen zurück zu senden, um im in der Anlage prozesswirksam zu werden, was in Summe nicht akzeptable Zeitverluste bedeutet. Geschlossene Regelkreise sind - insbesondere dann, wenn wegen der Regelgeschwindigkeit verhältnismäßig schnelle Abtastraten notwendig werden - mit Cloud-basierten Methoden wegen der unsicheren zumindest aber wenig deterministischen Kommunikation problematisch. Die wesentlichen Quellen solche Zeitverluste liegen a) in der Datenakquisition, der -vorverarbeitung und -verdichtung, b) in der Übertragung von Daten in die Cloud und c) in der Analytik und Ergebnisberechnung selbst. Um das Problem der Latenzzeiten in Cloud basierten Systemen abzumildern, wird versucht die Datensammlung durch geeignete schnellere Hardware zu ermöglichen. Desweiteren wird vorgeschlagen die Daten einer Vorverarbeitung zu unterziehen, um dann nur eine reduzierte Datenmenge in das Cloud-basierte System zu übertragen. Einen weiteren Ansatzpunkt betrifft die Übertragung der Daten, indem versucht wird schneller Übertragungskanäle mit entsprechenden Bandbreiten bereitzustellen. Im Rahmen der Analytik selbst werden die Cloud-basierten Systeme mit highend Rechnern ausgestattet, auf denen dann effiziente Algorithmen ablaufen sollen.

Es hat sich gezeigt, dass hohe Bandbreiten und geringe Wartezeiten allein oft nicht ausreichend sind. Dies gilt insbesondere dann, wenn kritische industrielle Prozesse involviert sind.

Aus der JP 2015 056 766 A ist ein Cloud-Steuerungssystem bekannt, mit welchem eine Berechnung von Steuerbefehlen innerhalb einer vorgegebenen Steuerzeit vorgenommen werden kann, selbst wenn eine Verzögerung bei der Kommunikation in einem IP-Netzwerk auftritt, welches die Steuerung mit der Cloud verbindet. Hierzu wird die Berechnung von Steuerbefehlen auf mehrere Server in der Cloud verteilt und die Verteilung neu 5 geregelt, wenn eine Antwort von einem der Server später als eine Standard-Antwortzeit erhalten wird.

Aus der EP 2 605 096 Al ist eine sicherheitsgerichtete Steuerung in Kombination mit Cloud-Computing bekannt. Abhängig davon, ob von einem in der Cloud angeordneten Rechnerverbund ermittelte, sicherheitsgerichtete Steuersignale als korrekt anerkannt werden, wird der technische Prozess entweder entsprechend dem sicherheitsgerichteten Steuersignal in fehlersicherer Weise gesteuert oder in fehlersicherer Weise in einen sicheren Zustand überführt.

Es ist somit Aufgabe der Erfindung eine alternative Vorrichtung und ein alternatives Verfahren anzugeben, welche Cloud-basierte Prozesssteuerung und/oder -analytik im industriellen Umfeld deterministisch in Echtzeit unterstützt.

Die Aufgabe wird gelöst durch eine Automatisierungseinheit mit den Merkmalen des Anspruchs 1 und ein Verfahren mit den Merkmalen des Anspruchs 4.

Ein System zur Steuerung eines Prozesses weist anlagenseitig wenigstens eine Automatisierungseinheit auf. Bei der industriellen Anlage kann es sich um jedwede Anlage mit einem Produktions- oder Fertigungsprozess im industriellen Umfeld handeln. Anlagenseitig heißt, dass die Automatisierungseinheit Bestandteil des originären Automatisierungssystems ist und in der Regel prozessnah angeordnet ist. Die Automatisierungseinheit führt eine Anzahl erster Prozessgrößenberechnungen durch. Dazu ist die Automatisierungseinheit mittels Sensoren und Aktoren in den Prozess eingebunden. Prozesseingangsvariablen sind die Sensoren und Aktoren, die für die Steuerung des Prozesses vom Eingangsbaustein der Automatisierungseinheit in der Regel zyklisch eingelesen und zwischengespeichert werden und somit einer weiteren softwaretechnischen Verarbeitung durch die Prozessoren der Automatisierungskomponenten zur Verfügung stehen. Die konkrete softwaretechnische Verarbeitung innerhalb der Automatisierungseinheit erfolgt nach einem Prozesssteuerungs-Algorithmus. Die Ausgangsgrößen dieser Verarbeitung, d.h. die Ergebnisse des Prozesssteuerungs-Algorithmus der anlagenseitigen Automatisierungseinheit werden über einen Ausgangsbaustein der Automatisierungseinheit in der Regel ebenfalls zyklisch prozesswirksam. Die Zeit t_{freq} beschreibt die Zeitspanne zwischen dem Zeitpunkt (t=0) an dem die Prozesseingangsvariablen im Eingangsbaustein vorliegen, d.h der Prozessor der Automatisierungseinheit auf die Daten zugreifen kann und dem Zeitpunkt an dem die Ergebnisse eines Prozesssteuerungs-Algorithmus im Ausgangsbaustein vorliegen und also über die Ausgangsbaugruppen prozesswirksam werden können. Die Prozessgrößen (Prozesseingangsvariablen) und die Ergebnisse bzw. wesentlichen Größen des Prozesssteuerungs-Algorithmus werden einem übergeordneten Steuerungs-/und Überwachungssystem zur Verfügung gestellt, indem durch eine erste Datenverbindung die Automationseinheit mit diesem übergeordneten Überwachungssystem zur Steuerung und/oder Überwachung des Prozesses verbunden ist.

Das System weist weiter wenigstens eine anlagenexterne Recheneinheit auf, die über verteilte Kommunikationsmechanismen auf die wenigstens eine Automatisierungseinheit aufgeschaltet ist, d.h. mit dieser Einheit Nachrichten austauschen kann. Als anlagenextern soll eine Recheneinheit angesehen werden, wenn sie räumlich und/oder funktional außerhalb des originären Automatisierungssystems angesiedelt ist. Solche anlagenexternen Recheneinheiten können sich z.B. bei externen Serviceprovidern befinden und werden auch als Cloud-Recheneinheiten bezeichnet. Der Datenaustausch erfolgt über eine zweite Datenverbindung. Zu den verteilten Kommunikationsmechanismen gehören beispielsweise die Kommunikationsstandards OPC (OPC DA, OPC UA) oder TCP/IP (Profinet), die den Zusammenschluss unabhängiger Recheneinheiten zu einem verteilten System erlauben.

Die anlagenexterne Recheneinheit führt parallel zur Berechnung des ersten Prozesssteuerungs-Algorithmus der anlagenseitigen Automatisierungseinheit einen zweiten Prozesssteuerungs-Algorithmus durch. Vorteilhaft wird dieser zweite Prozessteuerungs-Algorithmus wesentlich komplexer sein und wesentlich höhere Rechenleistung verglichen mit der Rechenleistung innerhalb der lokalen Automatisierungseinheit erfordern. Die komplexeren, zweiten Prozesssteuerungs-Algorithmen werden dabei in der Regel auch auf eine größere Menge von Daten fußen, die die Prozesseingangsvariablen für die Berechnung der Prozesssteuerungs-Algorithmen in der anlagenseitigen Automatisierungseinheit umfassen, aber auch zusätzliche Daten beinhalten. Sofern diese Daten vom Prozess selbst bereitgestellt werden können (beispielsweise durch zusätzliche und bis dahin nicht genutzte Sensoren oder Aktoren), werden diese ebenfalls über den Eingangsbaustein der anlagenseitigen Automatisierungseinheit eingelesen und bereitgestellt. Solche Daten können aber auch historische Daten umfassen, wie sie beispielsweise innerhalb der anlagenseitigen Automatisierungseinheit, des Überwachungssystems oder der anlagenexternen Recheneinheit selbst vorliegen. Die Berechnungen, die in der anlagenexternen Recheneinheit durchgeführt werden, sind weit komplexer und rechenintensiver als diejenigen, die in der anlagenseitigen Automatisierungseinheit durchgeführt werden können. So übernimmt die externe Recheneinheit erweiterte regelungstechnische Funktionen, wie sie beispielsweise von MPC-Reglern bekannt sind. Weiterhin können auch Condition Monitoring Systeme, Simulationssysteme oder Historiensysteme innerhalb dieser Recheneinheit zusätzliche Auswertungen durchführen und zu diesem Zwecke auch auf die durch die Regelung verarbeiteten Signale zurückgreifen. Wegen der höheren Anzahl von Daten, insbesondere historischer Daten können die Prozesssteuerungs-Algorithmen beispielsweise auch sog. Support Vector Machines (SVM) basierten Model Predictive Control (MPC) Algorithmen umfassen.

Wegen der oft notwendigen Anforderung an Echtzeit, d.h. der schnellen, insbesondere aber deterministisch wiederholten Abfolge von Ereignissen, insbesondere die Einhaltung einer vorgegebenen Abtastzeit werden die von der anlagenexternen Recheneinheit gesendeten und von der anlagenseitigen Automatisierungseinheit empfangenden Ergebnisse aus der Bearbeitung des zweiten Prozesssteuerungs-Algorithmus dahingehend geprüft, ob sie innerhalb der vorgegebenen Abtastzeit t_{freq} von der anlagenseitigen Automatisierungseinheit empfangen wurde. Die Prüfung übernimmt ein Überprüfungsbaustein innerhalb der Software der anlagenseitigen Automatisierungseinheit.

Für den Fall, dass die Ergebnisse innerhalb der vorgegebenen Zeit empfangen wurden, werden sie über den Ausgabebaustein innerhalb der anlagenseitigen Automatisierungseinheit ihren Ausgabebaugruppen zur Verfügung gestellt und somit prozesswirksam. Für den Fall allerdings, dass die Zeit t_{freq} abgelaufen ist, ohne ein Ergebnis von Berechnungen des zweiten Prozessgrößen-Algorithmus innerhalb der anlagenseitigen Automatisierungseinheit vorliegen zu haben, werden die Ergebnisse des parallel laufenden ersten Prozessgrößen-Algorithmus über die Ausgabebaugruppen prozesswirksam geschalten. Auf diese Weise ist auch sichergestellt, dass in Echtzeit ein Ergebnis vorliegt und etwaige Verzögerungen in der Kommunikation ohne wesentlichen Einfluss sind. Ein Ergebnis des ersten Prozesssteuerungs-Algorithmus mag für den Prozess nicht das Optimum darstellen, in jedem Fall stellt es jedoch eine vernünftige fehlerfreie Steuerung des Prozesses sicher.

Weiterhin wird offenbart ein Verfahren zur Steuerung und/oder Analytik eines industriellen Prozesses, wobei eine lokale und anlagenseitige Automatisierungseinheit innerhalb einer Zeit t_{freq} einen ersten Prozesssteuerungs-Algorithmus auf Basis einer Anzahl von Prozesseingangsvariablen N ausführt und wobei eine externe Recheneinheit einen zweiten Prozesssteuerungs-Algorithmus auf Basis einer Anzahl von Prozesseingangsvariablen M ausführt. Das Verfahren weist die folgenden Schritte auf: Bei t=0, d.h. beginnend mit t=0 werden in einem ersten Schritt die Prozesseingangsvariablen N und M durch die lokale Automatisierungseinheit gelesen. Sie werden damit dem Prozessor der Automatisierungseinheit zur Bearbeitung zur Verfügung gestellt. Bei den Prozesseingangsvariablen N handelt es sich um Daten von Sensoren und/oder Aktoren, die für die Berechnung eines ersten Prozesssteuerungs-Algorithmus notwendig sind. Bei den Prozesseingangsvariablen M handelt es sich um Daten von Sensoren und/oder Aktoren, die für die Berechnung eines zweiten, vergleichsweise komplexeren Prozesssteuerungs-Algorithmus notwendig sind. Das bedeutet es werden i.d.R. die Prozesseingangsvariablen M auch die Prozesseingangsvariablen N umfassen. In einem nächsten Schritt werden die Prozesseingangsvariablen M vom anlagenseitigen Automatisierungssystem an die externe Recheneinheit gesendet. Parallel dazu werden durch die lokale Automatisierungseinheit auf Basis der Prozesseingangsvariablen N die Berechnungen nach dem ersten Prozesssteuerungs-Algorithmus ausgeführt und die Ergebnisse bereitgestellt. Ein solcher Prozesssteuerungs-Algorithmus kann ein Iterationsschritt eines einfaches Regelverfahren sein, abhängig von der Leistung der anlagenseitigen Automatisierungseinheit ggf. auch schon eines MPC-Regelverfahren. Mit Erhalt der Prozesseingangsvariablen M in der externen Recheneinheit führt die externe Recheneinheit einen zweiten Prozesssteuerungs-Algorithmus aus und ermittelt die Ergebnisse. Ein solcher zweiter Prozesssteuerungs-Algorithmus ist ein mit dem ersten Prozesssteuerungs-Algorithmus verwandter Algorithmus. Er ist darauf gerichtet ein mit der Berechnung in der anlagenseitigen Automatisierungseinheit vergleichbares, in der Regel aber genaueres, akkurateres, präziseres, höherwertiges Ergebnis zu liefern. Zumindest aber werden die Berechnungsmethoden im zweiten Prozesssteuerungs-Algorithmus komplexer und umfänglicher sein. Vergleichbar in diesem Sinne heißt die zweiten Berechnungen sind technologisch gleichwertig bzw. äquivalent. Beispielsweise könnte, sofern der erste Prozesssteuerungs-Algorithmus einen einfachen Regelkreis umfasst, der zweite Prozesssteuerungs-Algorithmus einen MPC-Regler abbilden.

In einem weiteren Schritt werden die Ergebnisse dieser zweiten Berechnung in der anlagenseitigen Automatisierungseinheit empfangen. Dies kann durch Abfrage der lokalen Automatisierungseinheit erfolgen, oder durch aktives Senden der anlagenexternen Recheneinheit. Innerhalb der anlagenseitigen Automatisierungseinheit wird in einem nächsten Schritt überprüft, ob die Ergebnisse des zweiten Prozesssteuerungs-Algorithmus in der anlagenseitigen Automatisierungseinheit so rechtzeitig vorliegen, dass sie zur Abtastzeit prozesswirksam werden. Dazu wird das Ergebnis innerhalb der Zeit Abtastzeit vorliegen müssen, maximal zum Zeitpunkt der Abtastzeit. Für den Fall, dass das Ergebnis rechtzeitig vorliegt, wird dieses angewendet, d.h. das Ergebnis wird Grundlage der Prozesssteuerung, der Prozess wird auf Basis dieses Ergebnisses gesteuert. Sofern, das Ergebnis einen Wert für die Ansteuerung eines Regelstellgliedes beinhaltet würde das zugehörige Stellglied auf mit diesem Wert von der Automatisierungseinheit angesteuert. Andernfalls wird das Ergebnis des ersten Prozesssteuerungs-Algorithmus auf die Prozesssteuerung angewendet, d.h. der Prozess wird auf Grundlage dieses Ergebnisses bzw. direkt mit diesem Ergebnis gesteuert.

Die oben beschriebenen Eigenschaften, Merkmale, Vorteile dieser Erfindung sowie die Art und Weise, wie diese erreicht werden, werden in Verbindung mit den Figuren näher erläutert. Hierbei zeigen in schematischer Darstellung:
- FIG 1: ein System für eine verteilte Prozesssteuerung einer industriellen Anlage
- FIG 2: das Ablaufdiagram des beschriebenen Verfahrens.

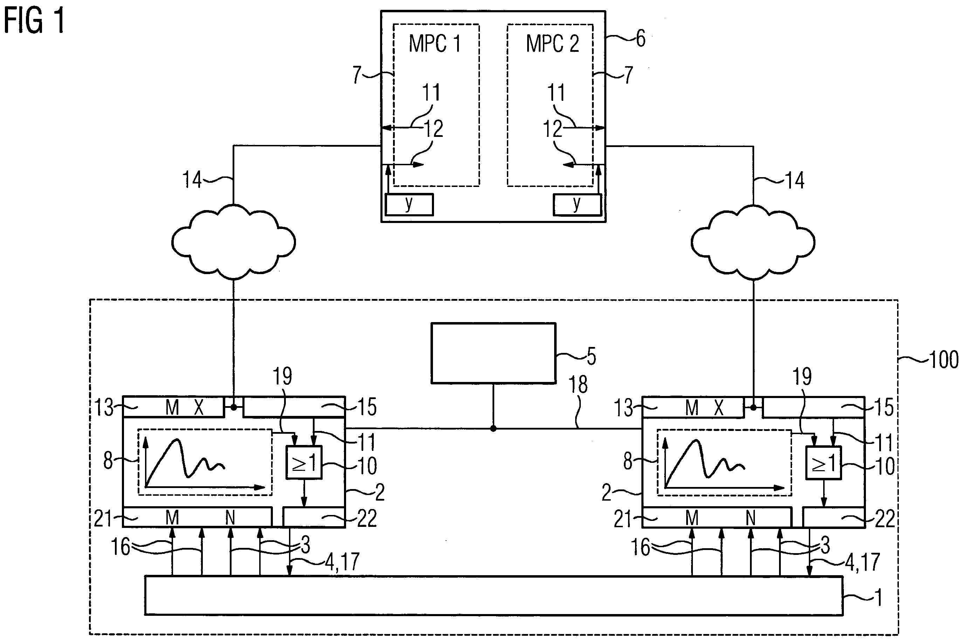

FIG 1 zeigt ein System 100 zur Steuerung des industriellen Prozesses 1, beispielsweise einen Prozess zur Wasseraufbereitung in einer Kläranlage oder ein Prozess zur Förderung einer Flüssigkeit, eines Gases durch eine Pipeline. Der industrielle Prozess kann auch ein Prozess sein, der innerhalb eines Standortes abläuft, oder aber über mehrere Standorte hinweg. Der Prozess 1 wird gesteuert und geregelt über dezentrale, anlagenseitige Automatisierungseinheiten 2. Diese sind mit einem oder mehreren hier nicht dargestellten Prozessoren ausgestattet, die in Zusammenwirken mit den notwendigen Zwischenspeichern die in Softwarecode hinterlegten Befehlsanweisungen abarbeiten. Die Befehlsanweisungen beziehen sich auf sämtliche Prozesssteuerungs-Algorithmen zur Steuerung und Regelung des Prozesses sowie auf die Daten-Kommunikation zwischen den Einheiten. Die Automatisierungseinheit 2 weisen zur Steuerung und Regelung des Prozesses eine Reihe von Wirkverbindungen 3, 16 zu in FIG 1 nicht näher dargestellten Sensoren oder Aktoren aufweisen. Über diese Verbindung liest der Eingangsbaustein 21 die Daten ein, die danach in einem Speicherbereich der Automatisierungseinheit als Prozesseingangsvariablen N, M vorliegen. Über die Wirkverbindungen 4, 17 werden Steuerkommandos vom Ausgabebaustein 22 zu in FIG 1 nicht näher dargestellten Aktoren des Prozesses realisiert. Beispielhaft sind zwei Automatisierungseinheiten 2 gezeigt, in der Praxis werden mehrere Automatisierungseinheiten den Prozess steuern, regeln und überwachen. Über eine erste Datenverbindung 20 sind die Automatisierungseinheiten 2 mit dem Überwachungssystem 5 verbunden, welches die Steuerung und Überwachung des Prozesses 1 übernimmt. Die Automatisierungseinheiten 2 führen auf Basis der über Wirkverbindung 3 generierten Prozesseingangsvariablen N Prozesssteuerungs-Algorithmen 8 aus. Das sind prozesswirksame Überwachungsanalysen und Regelungsfunktionen, die i.d.R. einfachere und weniger komplexe Analyse- und Regelungsaufgaben beinhalten. Das Ergebnis 19 dieses Prozesssteuerungs-Algorithmus wird in der Automatisierungseinheit 2 zur weiteren Verwendung vorgehalten und soweit nicht benötigt in einem nächsten Zyklus überschrieben. In dieser Konfiguration ist das System 100 funktionsfähig und kann seine Steuer-, Regelungs- und Überwachungsaufgaben erfüllen. Daten, die über die Wirkverbindungen 3, 16 von Sensoren und Aktoren des Prozesses von der anlagenseitigen Automatisierungseinheit 2 als Prozesseingangsvariablen M eingelesen worden sind, werden dem Sendebaustein 13 übergeben. Die Prozesseingangsvariablen M können auch die Prozesseingangsvariablen N enthalten. Zusätzlich können dem Sendebaustein 13 auch historische Daten X übergeben werden, die im Verlaufe der Zeit in Automatisierungseinheit 2 gespeichert worden sind. Das System 100 ist erweitert durch eine anlagenexterne Recheneinheit 6. Diese ist mit einem oder mehreren hier nicht dargestellten Prozessoren ausgestattet, die in Zusammenwirken mit den notwendigen Zwischenspeichern die in Softwarecode hinterlegten Befehlsanweisungen abarbeiten. Die Befehlsanweisungen beziehen sich auf sämtliche Prozesssteuerungs-Algorithmen zur Steuerung, Regelung und Analytik des Prozesses sowie auf die Daten-Kommunikation zwischen den Einheiten. Die Recheneinheit 6 ist über eine zweite Datenverbindung 14 mit den Automatisierungseinheiten 2 verbunden. Im vorliegenden Beispiel sind beide Automatisierungseinheiten 2 über die zweite Datenverbindung 14 mit der anlagenexternen Recheneinheit 6 verbunden. In anderen Ausführungsformen kann auch nur eine oder eine beliebige Anzahl von Automatisierungseinheiten 2 mit der anlagenexternen Recheneinheit 6 verbunden sein. Die zweite Datenverbindung 14 wird bevorzugt über das Internet entweder kabelgebunden oder drahtlos realisiert. Die anlagenexterne Recheneinheit 6 führt auf Basis von Eingangsprozessvariablen 12, die im Wesentlichen basieren auf den Prozesseingangsvariablen M Prozesssteuerungs-Algorithmen 7 durch und gibt Ergebnisse 11 dieser Berechnungen aus. Die Eingangsprozessvariablen 12 können ebenso basieren auf den historischen Daten X, die in der Automatisierungseinheit 2 vorliegen. Alternativ oder zusätzlich können die Eingangsprozessvariablen 12 auf historischen Daten Y, die in der Recheneinheit 6 selbst vorliegen basieren. Beispielhaft stellt FIG 1 als Prozesssteuerungs-Algorithmus 7 einen MPC Regelstruktur dar. Aber auch umfangreichere Datenanalytik kann Gegenstand des vorgenannten Algorithmus sein. Die Ergebnisse 11 des Prozesssteuerungs-Algorithmus 7 werden vom Empfangsbaustein 15 der Automatisierungskomponente 2 empfangen. Der Überprüfungsbaustein 10 erhält die Information darüber, ob das Ergebnis 11 innerhalb einer von der konkreten Regelungsaufgabe vorgegebenen Zykluszeit verfügbar ist. Ist es verfügbar wird es auf den Ausgabebaustein 22 gegeben und wird über die Wirkverbindung 17 prozesswirksam. Liegt es nicht innerhalb des Zeitintervalls vor, wird der Ausgabebaustein 22 mit dem parallel ermittelten Ergebnis 19 versorgt und als Wirkverbindung 4 prozesswirksam.

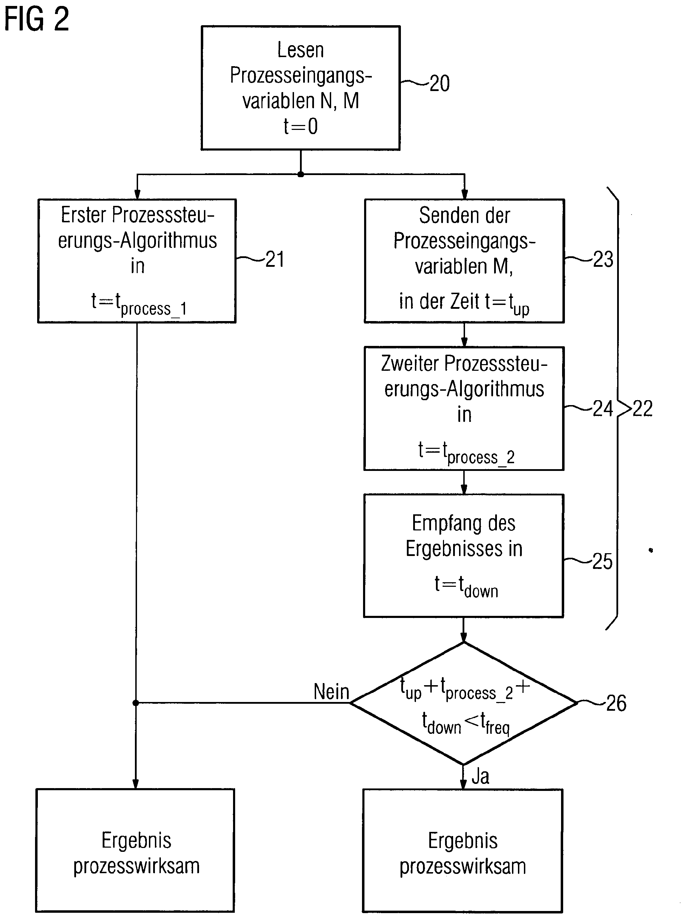

FIG 2 zeigt das Ablaufdiagramm des beschriebenen Verfahrens. Die Steuerung und Regelung des Prozesses 1 erfolgt zyklisch. Die Zykluszeit ist mit t_{freq} festgelegt.

Danach werden im Schritt 20 die Prozesseingangsvariablen N und M gelesen. Auch das Einlesen von Prozesseingangsvariablen durch die Automatisierungseinheit erfolgt zyklisch. D.h. zu Beginn der Zykluszeit steht dem Programm das Prozessabbild aktualisiert zur Verfügung, indem die Eingabebaugruppen 21 der Automatisierungseinheit 2 abgefragt wurden. Am Ende der Zykluszeit werden die Ausgabebaugruppen 22 mit den Prozessergebnissen 11, 19 versorgt, worüber diese den Prozess steuern. Jedes neue Lesen durch das zyklische Programm der Automatisierungseinheit soll zum Zeitpunkt t=0 erfolgen. Die Prozesseingangsvariablen N werden im Schritt 21 durch den ersten Prozesssteuerungs-Algorithmus in der Automatisierungseinheit 2 innerhalb der Zeit t_{process_1} verarbeitet. Das Ergebnis 19 steht am Ende der Berechnung dieses Prozesssteuerungs-Algorithmus zur Verfügung. Die Automatisierungseinheit 2 ist in der Lage innerhalb der Zykluszeit t_{freq} ihren Prozesssteuerungs-Algorithmus zu durchlaufen. Parallel zum Schritt 21 läuft die Schrittabfolge 22. Darin werden im Schritt 23 die Prozesseingangsvariablen M an die Recheneinheit 6 gesendet. Der gesamte Schritt 23 soll auch den Empfang der Daten in der Recheneinheit 6 beinhalten und innerhalb der Zeit tᵤₚ erfolgen. Die Prozesseingangsvariablen M können auch die Prozesseingangsvariablen N beinhalten, sie können auch nur diese umfassen. In der Regel werden die Prozesseingangsvariablen jedoch Prozessdaten umfassen, die über den Umfang der Daten N hinausgehen. Auf Basis dieser Prozesseingangsvariablen wird im Schritt 24 ein zweiter Prozesssteuerungs-Algorithmus innerhalb der Zeit t_{process_2} bearbeitet, der Ergebnisse zur Steuerung des Prozesses beispielsweise Ansteuerbefehle für Aktoren liefert. Diese werden im Schritt 25 innerhalb der Zeit t=t_{down} von der Automatisierungseinheit 2 empfangen. Im Entscheidungsblock 26 wird durch die Automatisierungseinheit 2 geprüft, ob die Summe der Zeiten tᵤₚ, t_{process_2} und t_{down} kleiner als die Zykluszeit t_{freq} ist und also das Ergebnis des Prozesssteuerungs-Algorithmus innerhalb der Zykluszeit vorliegt. Ist dies der Fall werden diese Berechnungen prozesswirksam, d.h. Aktoren werden beispielsweise auf Basis Stellgrößenberechnungen in der Recheneinheit 6 angesteuert.

Sollte die Ergebnisse nicht innerhalb der Zykluszeit vorliegen werden alternativ die Berechnungen der Automatisierungseinheit 2 prozesswirksam.

## Patentansprüche

1. Anlagenseitige Automatisierungseinheit (2),
wobei die anlagenseitige Automatisierungseinheit (2) dazu eingerichtet ist, innerhalb einer Zeit t_{freq} eine Ermittlung von Ergebnissen (19) eines ersten Prozesssteuerungs-Algorithmus (8) auf Basis von zur Zeit t=0 eingelesenen Prozesseingangsvariablen N durchzuführen,
wobei die anlagenseitige Automatisierungseinheit (2) dazu eingerichtet ist, zum Zeitpunkt t=0 die Prozesseingangsvariablen M einzulesen und zur Verarbeitung an eine anlagenexterne Recheneinheit zu senden,
wobei die anlagenseitige Automatisierungseinheit zum Empfang von Ergebnissen (11) eines zweiten Prozesssteuerungs-Algorithmus (7) von der anlagenexternen Recheneinheit eingerichtet ist,
wobei die anlagenseitige Automatisierungseinheit dazu eingerichtet ist, zu prüfen, ob die Ergebnisse des zweiten Prozesssteuerungs-Algorithmus innerhalb einer Zeit t<t_{freq} oder t=t_{freq} empfangen wurden, wobei t_{freq} einer vorgegebenen Abtastzeit bzw. einer festgelegten Zykluszeit entspricht,
wobei die anlagenseitige Automatisierungseinheit dazu eingerichtet ist,
die Ergebnisse des zweiten Prozesssteuerungs-Algorithmus auf den Prozess anzuwenden, sofern diese Ergebnisse in der Zeit t<t_{freq} oder t= t_{freq} empfangen wurden,
wobei die anlagenseitige Automatisierungseinheit (2) dazu eingerichtet ist, die Ergebnisse des ersten Prozesssteuerungs-Algorithmus (8) auf den Prozess anzuwenden, sofern die Ergebnisse des zweiten Prozesssteuerungs-Algorithmus (7) in der Zeit t>t_{freq} empfangen wurden.

2. Anlagenseitige Automatisierungseinheit (2) nach Anspruch 1,
wobei die anlagenseitige Automatisierungseinheit über eine erste Datenverbindung mit einem Überwachungssystem (5) zur Steuerung und/oder Überwachung des Prozesses (1) verbindbar ist.

3. Anlagenseitige Automatisierungseinheit (2) nach einem der vorherigen Ansprüche,
wobei die anlagenexterne Recheneinheit über verteilte Kommunikationsmechanismen auf die anlagenseitige Automatisierungseinheit aufschaltbar ist und dazu eingerichtet ist, mit dieser Nachrichten auszutauschen.

4. Verfahren zur Steuerung und/oder Analytik eines industriellen Prozesses, umfassend die Schritte:
Lesen von Prozesseingangsvariablen N und M durch eine lokale Automatisierungseinheit zur Zeit t=0, wobei die lokale Automatisierungseinheit auf Basis der zur Zeit t=0 eingelesenen Prozesseingangsvariablen N eine Ermittlung von Ergebnissen basierend auf einem ersten Prozesssteuerungs-Algorithmus innerhalb einer Zeit t_{freq} durchführt, Senden der Prozesseingangsvariablen M an eine externe Recheneinheit, Empfangen wenigstens eines Ergebnisses eines zweiten Prozesssteuerungs-Algorithmus, welches Ergebnis durch die externe Recheneinheit anhand der Prozesseingangsvariablen M ermittelt wurde, in der lokalen Automatisierungseinheit,
Überprüfung, ob das Ergebnis des zweiten Prozesssteuerungs-Algorithmus der externen Recheneinheit in der Zeit t<t_{freq} oder t=t_{freq} empfangen wurde, wobei t_{freq} einer vorgegebenen Abtastzeit bzw. einer festgelegten Zykluszeit entspricht, Anwenden des Ergebnisses des zweiten Prozesssteuerungs-Algorithmus auf den Prozess, sofern das Ergebnis in der Zeit t<t_{freq} oder t=t_{freq} empfangen wurde,
Anwenden des Ergebnisses des ersten Prozesssteuerungs-Algorithmus auf den Prozess, sofern das Ergebnis des zweiten Prozesssteuerungs-Algorithmus in der Zeit t>t_{freq} empfangen wurde.

## Claims

1. Plant-side automation unit (2),
wherein the plant-side automation unit (2) is configured, within a time t_{freq}, to perform a determination of results (19) of a first process control algorithm (8) based on process input variables N read in by time t=0,
wherein the plant-side automation unit (2) is configured to read in the process input variables M at time t=0 and send them to a processing unit external to the plant for processing,
wherein the plant-side automation unit is configured to receive results (11) of a second process control algorithm (7) from the processing unit external to the plant,
wherein the plant-side automation unit is configured to check whether the results of the second process control algorithm were received within a time t<t_{freq} or t=t_{freq}, wherein t_{freq} corresponds to a predetermined sampling time or a defined cycle time,
wherein the plant-side automation unit is configured to apply the results of the second process control algorithm to the process, where these results were received within time t<t_{freq} or t=t_{freq},
wherein the plant-side automation unit (2) is configured to apply the results of the first process control algorithm (8) to the process, where the results of the second process control algorithm (7) were received within time t<t_{freq}.

2. Plant-side automation unit (2) according to claim 1,
wherein the plant-side automation unit can be connected by a first data connection to a monitoring system (5) for control and/or monitoring of the process (1).

3. Plant-side automation unit (2) according to one of the preceding claims,
wherein the processing unit external to the plant can be connected via distributed communication mechanisms to the plant-side automation unit and is configured to exchange messages with this.

4. Method for control and/or analytics of an industrial process, comprising the steps:
reading of process input variables N and M by a local automation unit at time t=0, wherein the local automation unit performs a determination of results based on a first process control algorithm within a time t_{freq}, based on the process input variables N read-in at time t=0,
sending the process input variables M to an external processing unit,
receiving at least one result of a second process control algorithm, which result was determined by the external processing unit based on the process input variables M, in the local automation unit,
checking whether the result of the second process control algorithm of the external processing unit was received within the time t<t_{freq} or t=t_{freq}, wherein t_{freq} corresponds to a predetermined sampling time or a defined cycle time,
applying the result of the second process control algorithm to the process, where the result was received within the time t<t_{freq} or t=t_{freq},
applying the result of the first process control algorithm to the process, where the results of the second process control algorithm was received within time t<t_{freq}.

## Revendications

1. Unité (2) d'automatisation du côté de l'installation,
dans laquelle l'unité (2) d'automatisation du côté de l'installation est conçue pour effectuer, dans un temps t_{freq}, une détermination de résultats (19) d'un premier algorithme (8) de commande de processus sur la base de variables N d'entrée de processus lues au temps t=0,
dans laquelle l'unité (2) d'automatisation du côté de l'installation est conçue pour lire à l'instant t=0, les variables M d'entrée de processus et pour les envoyer à une unité informatique extérieure à l'installation,
dans laquelle l'unité d'automatisation du côté de l'installation est conçue pour la réception, par l'unité informatique extérieure à l'installation, de résultat (11) d'un deuxième algorithme (7) de commande de processus,
dans laquelle l'unité d'automatisation du côté de l'installation est conçue pour contrôler si les résultats du deuxième algorithme de commande de processus ont été reçus dans un temps t<t_{freq} ou t=t_{freq}, t_{freq} correspondant à un temps d'échantillonnage donné à l'avance ou à un temps de cycle fixé,
dans laquelle l'unité d'automatisation du côté de l'installation est conçue pour appliquer les résultats du deuxième algorithme de commande de processus au processus, pour autant que ces résultats ont été reçus dans le temps t<t_{freq} ou t=t_{freq},
dans laquelle l'unité (2) d'automatisation du côté de l'installation est conçue pour appliquer les résultats du premier algorithme (8) de commande de processus au processus, pour autant que les résultats du deuxième algorithme (7) de commande de processus ont été reçus dans le temps t>t_{freq}.

2. Unité (2) d'automatisation du côté d'une installation suivant la revendication 1,
dans laquelle l'unité d'automatisation du côté de l'installation peut, pour la commande et/ou le contrôle du processus (1), communiquer avec un système (5) de contrôle par une première liaison de donnée.

3. Unité (2) d'automatisation du côté d'une installation suivant l'une des revendications précédentes,
dans laquelle l'unité informatique extérieure à l'installation peut être branchée par des mécanismes de communication répartis sur l'unité d'automatisation du côté de l'installation et est conçue pour échanger des messages avec celle-ci.

4. Procédé de commande et/ou d'analyse d'un processus industriel comprenant les stades :
lecture de variables N et M d'entrée de processus par une unité d'automatisation locale au temps t=0, l'unité d'automatisation locale effectuant, dans un temps t_{freq}, sur la base des variables N d'entrée de processus lues au temps t=0, une détermination de résultats reposant sur un premier algorithme de commande de processus,
envoi des variables M de processus à une unité informatique extérieure,
réception d'au moins un résultat d'un deuxième algorithme de commande de processus, qui a été déterminé par l'unité informatique extérieure à l'aide des variables M d'entrée de processus, dans l'unité d'automatisation locale,
contrôle du point de savoir si le résultat du deuxième algorithme de commande de processus de l'unité informatique extérieure a été reçu dans le temps t<t_{freq} ou t=t_{freq}, t_{freq} correspondant à un temps d'échantillonnage donné à l'avance ou un temps de cycle fixé,
application du résultat du deuxième algorithme de commande de processus au processus, pour autant que le résultat a été reçu dans le temps t<t_{freq} ou t=t_{freq},
application du résultat du premier algorithme de commande de processus au processus, pour autant que le résultat du deuxième algorithme de commande de processus a été reçu dans le temps t>t_{freq}.
